# EUROPEAN PATENT SPECIFICATION

(11) **EP 2 007 534 B1**
(45) Date of publication and mention of the grant of the patent: **29.12.2010**
(21) Application number: 07752374.4
(22) Date of filing: 05.03.2007
(51) Int. Cl.: B21D 53/10, F16C 17/10, F16C 33/14, F16C 33/20, B62D 1/20, B21D 41/04

(54) **BEARING ASSEMBLIES**
LAGERANORDNUNGEN
ENSEMBLES ROULEMENTS

(30) Priority: 22.03.2006 US 386461
(43) Date of publication of application: 31.12.2008
(73) Proprietor: Saint-Gobain Performance Plastics Corporation, Aurora, OH 44202 (US)
(72) Inventor: CORDIVARI, Matthew A., Bloomfield, NJ 07003 (US)
(74) Representative: Zimmermann & Partner
(86) International application number: PCT/US2007/005665
(87) International publication number: WO 2007/111810

(56) References cited:
- WO-A-02/070908
- GB-A- 2 184 200

## Description

### BACKGROUND

### Field of the Disclosure

This disclosure is directed generally to a process of forming and is particularly directed to a method of forming composite materials and composite bearing assemblies.

### Description of the Related Art

Composite materials have long been utilized in various applications. In particular, composite materials have recently been utilized as bearings. Generally, bearings are mechanical devices used for mitigating frictional forces. Bearings generally belong to two broad categories, linear or radial bearings, designated as such based upon the nature of the frictional forces they mitigate. Linear or thrust bearings are used in applications having motion along a straight line, such as moving a drawer in and out. Radial or rotary bearings are used in applications that involve movement around a center axis, such as a wheel on an axis. Additionally, some bearings are designed to deal with both thrust and radial loads.

Various types of materials have been utilized depending upon the type of bearing needed to properly reduce friction. In fact, depending upon the requirements and loads expected in the application, the material of the bearing can range from plastics, metals, to even ceramics. Recent advances have provided a new genre of bearings called self-lubricating bearings, that may be used in more demanding environments, such as the high temperatures of an automobile. The type of material used facilitates the self-lubricating properties of these bearings. Some common self-lubricating materials include various polymers, graphite or Graphalloy® a graphite/metal alloy, and molybdenum disulfide (MoS₂). Self-lubricating bearings require little or no oil and typically do not deteriorate with wear as quickly as traditional bearings that rely upon traditional, supplemental lubrication.

The processes used to form bearings varies depending upon the complexity of the shape of the bearing and the material being formed but generally involves techniques such as molding, casting, or stamping operations. Bearings having more complex structures are generally formed through molding or casting processes. Bearings having less complex structures, typically utilize forming processes such as stamping operations, which quickly yield the desired shape from a large sheet of material. However, these processes can be wasteful in light of the cost of the final product.

Accordingly, the industry continues to require improvements to produce high performance composites, such as those used in bearing applications, and as such, the industry also desires processes for forming high performance composites utilizing more cost effective and efficient processing.
WO 02/070908 relates to flanged bushes having a substantially cylindrical body portion and a flange portion. The flange portion may be formed by a method wherein an end portion of the substantially cylindrical structure is bent about 45 degrees in a first step and about 90 degrees in a second step. The flanged bushes do not comprise a substantially closed end. An example given in WO 02/070908 is a 1mm thick in-turned flanged bush with an outer diameter of about 105 mm and an in-turned flange diameter of about 90 mm, formed by the bending process without wrinkling.

### SUMMARY

According to a first aspect, a process is provided that includes the steps of providing a rigid strip of material, forming projections along a side of the rigid strip, and shaping the rigid strip with a mandrel to form a shaped piece. The process further includes a step of shaping the projections to form a substantially closed end of the shaped piece. The closed end of the shaped piece includes a hole substantially having a diameter not greater than 0.1 mm.

According to a second aspect, a bearing assembly is provided that includes a composite material made of a metal substrate having a substantially cylindrical shape and a polymer layer overlying the metal substrate. According to this aspect, the polymer layer is disposed on an inner surface of the cylindrical shape and the cylindrical shape has a closed end made of a plurality of folded projections. The closed end has a hole substantially centered between the plurality of folded projections, which hole has a diameter not greater than 0.1 mm.

According to another aspect, a steering assembly includes a first shaft having a first end coupled to a steering input device and a second end. The steering assembly further includes a second shaft having a first end and a second end and a coupling fastened to the second end of the first shaft and the first end of the second shaft. The coupling has a substantially t-shaped assembly that includes a plurality of arms and a plurality of bearing cups disposed at the ends of each of the arms. Moreover, each of the bearing cups has a substantially cylindrical shape with a closed end made of folded projections. The closed end includes a hole having a diameter not greater than 0.1 mm.

### BRIEF DESCRIPTION OF THE DRAWINGS

The present disclosure may be better understood, and its numerous features and advantages made apparent to those skilled in the art by referencing the accompanying drawings.

FIG. 1 is a flow chart illustrating a forming process according to a particular embodiment.

FIG. 2 is an illustration of a rigid strip having projections according to a particular embodiment.

FIG. 3 is an illustration of a shaped piece according to a particular embodiment.

FIG. 4 is an illustration of a bearing cup according to a particular embodiment.

FIG. 5 is an illustration of a bearing cup according to a particular embodiment.

FIG. 6 is an illustration of a universal joint according to a particular embodiment.

FIG. 7 is an illustration of a steering assembly utilizing a bearing assembly according to a particular embodiment.

The use of the same reference symbols in different drawings indicates similar or identical items.

### DESCRIPTION OF THE PREFERRED EMBODIMENT(S)

According to one aspect, a process is disclosed that includes the steps of providing a rigid strip and forming projections along a side of the rigid strip. The process also includes a step of shaping the rigid strip with a mandrel to form a shaped piece and shaping the projections to form a substantially closed end of the shaped piece, wherein the substantially closed end includes a hole having a diameter not greater than 0.1 mm.

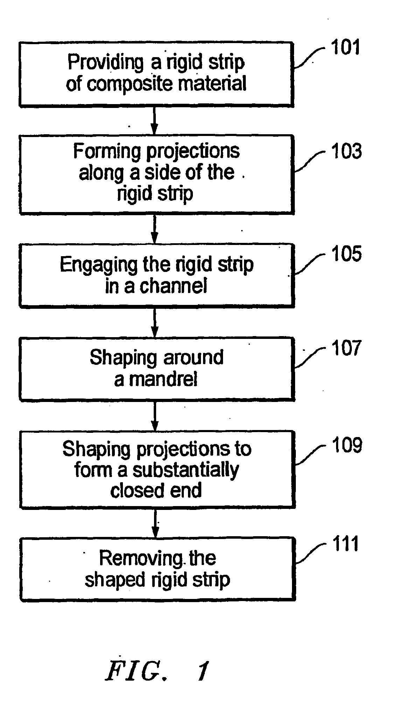

Referring to FIG. 1, a flow chart is provided illustrating a forming process for shaping a rigid material according to one embodiment. According to the particular embodiment illustrated in FIG. 1, the process can be initiated by providing a rigid strip of material 101. In one embodiment, the material can be a composite material, for example, which can include a substantially rigid substrate and an overlying polymer layer. In one embodiment, the substantially rigid substrate can be a metal, a metal alloy, or a combination thereof. Suitable metals for the substantially rigid substrate can include pliable metals, for example, aluminum, iron, steel, copper, other transition metals, or alloys thereof. Still, according to a particular embodiment the substantially rigid substrate can be made of a woven metal mesh.

Generally, the substantially rigid substrate can be formed as a strip having a first and second major surfaces. According to one embodiment, the rigid strip of material (the rigid substrate with the overlying polymer layer) has an aspect ratio of not less than about 3:1. According to another embodiment, the aspect ratio can be greater, such as not less than about 6:1 or about 8:1. Still, according to a particular embodiment the aspect ratio of the rigid strip can be within a range of between about 3:1 and about 10:1. As used herein, the term "aspect ratio" is defined as the ratio between the longest dimension of the rigid strip (the length) and the second longest dimension (the width). Generally, the major surface of the rigid strip is the plane defined by the dimensions of the length and the width. As such, the shortest dimension of the strip is the thickness, and according to one embodiment, the average total thickness of the rigid strip can typically be not greater than about 3.0 mm, such as not greater than about 2.0 mm, or even not greater than about 1.0 mm. As will be appreciated, the average total thickness of the strip can be dependent in part upon the thickness of the substantially rigid substrate, which according to one embodiment can be not greater than about 2.0 mm, such as not greater than about 1.0 mm, or even not greater than about 0.5 mm.

According to another embodiment, the step of providing a rigid strip of material 101 includes cutting a rigid strip having a discrete length from a larger rigid strip or sheet of material. For most applications, the length of the strip can be typically not greater than about 100 cm. According to one embodiment, the length of the strip is not greater than about 75 cm, or not greater than about 50 cm. Still, the length of the rigid strip can be less, such as not greater than about 25 cm, or even about 10 cm. In a particular embodiment, the length of the strip can be within a range of between about 75 cm and about 5.0 cm. Cutting of the rigid strip of material can be accomplished using manual or automatic devices, such as a punch with a blade.

The step of providing a rigid strip of composite material 101 can also include cutting a rigid strip of a discrete width from a larger rigid strip or sheet of material. According to one embodiment, the width of the strip can generally be not greater than about 50 cm, such as not greater than about 25 cm, or even not greater than about 10 cm. As such, the width of the rigid strip can be smaller depending upon the desired dimensions of the final piece, such as not greater than about 5.0 cm.

In further reference to providing a rigid strip of composite material 101, according to a particular embodiment, the composite material includes a polymer layer overlying a major surface of the substantially rigid substrate. According to one embodiment, the polymer layer can include a laminate material that can be obtained from a sheet of material that has been skived or shaved to produce a polymer sheet having a fine thickness, such as less than about 1.0 mm thick. In the context of a polymer laminate, the substrate can be laminated with the polymer sheet, such that the polymer overlies at least a major surface of the substantially rigid substrate as a sheet of material. Optionally, an additional rigid mesh layer, such as a bronze metal mesh layer, can be introduced between the substantially rigid substrate and the polymer laminate layer. Forming the composite material typically includes heat and pressure treatment to bond the polymer laminate and the substantially rigid substrate. Additionally, a rigid backing layer, such as a metal backing layer can be affixed to the composite material for improved durability and formability. According to one embodiment, the metal backing can overlie the substantially rigid substrate.

In further reference to the polymer layer, according to one embodiment, the polymer layer can substantially overlie one major surface of the substantially rigid substrate. Alternatively, the polymer layer can overlie the sides of the substrate that are adjacent the major surface of the substrate. Generally, the polymer layer can include a pliable material, suitable for forming with the metal. According to one embodiment, suitable polymer materials include fluoropolymers, such as a polytetrafluoroethylene (PTFE), the addition of which is suitable for use in self-lubricating bearing applications. In addition, the polymer layer can include fillers such as ceramics, ceramic fibers or carbon containing compounds, which are suitable for improving the resilience of the polymer material to high temperatures. In a particular embodiment, the composite material is NORGLIDE® composite material, commercially available from Saint-Gobain Performance Plastics Corporation, 150 Dey Road, Wayne, New Jersey.

Referring again to the flow chart illustrated in FIG. 1, after providing a strip of material 101, projections are formed along a side of the rigid strip 103. The projections can be formed using various techniques, such as removing material from the side of the rigid strip. According to one embodiment, the projections can be formed by cutting the composite strip, for example, using a punching or press mechanism and a blade to remove material. According to one embodiment, cutting the projections can include cutting a pattern of projections such that there is a regular and repeating geometry of projections.

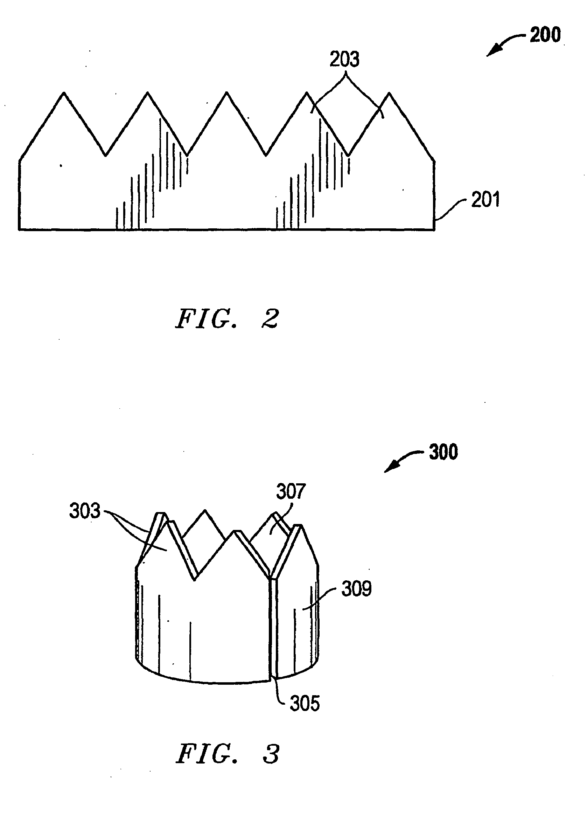

For clarity, FIG. 2 is provided to illustrate a composite strip 201 having a plurality of projections 203. As illustrated in FIG. 2, and according to a particular embodiment, the projections can be a pattern of triangular shaped projections, resembling a saw-tooth pattern. It will be appreciated that other suitable patterns of projections can be formed. Additionally, as illustrated in FIG. 2, the projections extend the entire length of one side of the strip and extend from the side of the rigid strip in a plane parallel to the major surface of the rigid strip. Alternatively, depending upon the nature of the pattern of projections, the pattern may not extend for the entire length of a side of the strip.

In further reference to the projections, according to one embodiment, forming the projections can include removing not more than about 50% of the original surface area of the major surface of the rigid strip. According to another embodiment, forming the projections can include removing not more than about 35%, such as about 25%, or even about 15% of the original surface area of the major surface of the strip.

Referring again to FIG. 1, after forming the projections 103, the rigid strip can be engaged in a channel 105. The strip can be machine fed into the channel or can be manually fed into the channel in preparation for further forming. Generally, the channel can have dimensions substantially similar to the dimensions of the composite strip, particularly the width of the composite strip, such that at least a portion of the strip can be secured in the channel during forming.

After the rigid strip is engaged in the channel 103, the composite strip can be shaped around a mandrel 107. Generally, the strip can engage the mandrel by contacting a portion of the strip to the surface of the mandrel. According to a particular embodiment, the rigid strip can include a composite material having a substantially rigid substrate and an overlying polymer layer. During shaping of such a composite material around a mandrel, the polymer layer can be adjacent or in contact with the mandrel, and as such the substantially rigid substrate or other overlying layer can define the outer surface of the shaped piece. It will be appreciated that engaging the mandrel can include securing a portion of the composite strip against the mandrel.

In reference to shaping the strip around the mandrel, the contour of the perimeter of the mandrel will be substantially similar to the geometry of the final shaped piece. Generally, the mandrel can be a polygonal shape, particularly a symmetrical polygonal shape, such as a circle, or the like. According to a particular embodiment, the mandrel has a circular contour for forming a shaped piece having a circular contour, whereby the circumference of the mandrel substantially defines the inner circumference of the shaped piece. Generally, the size of the mandrel can be altered depending upon the desired size of the shaped piece. In the context of a shaped piece having a circular contour, the diameter of the mandrel can be not less than about 0.5 cm, such as not less than about 2.5 cm, and particularly within a range of diameters between about 2.5 cm and about 15 cm.

In further reference to the shaping of the strip around the contour of the mandrel 107, according to a particular process, the strip can be shaped by rolling the major surface of the rigid strip under a sufficient force to guide the strip around the mandrel. As mentioned previously, the rigid strip can include a composite material having a polymer laminate layer contacting the mandrel during forming. In such an embodiment, the rollers move over the surface of the composite strip (i.e. the substantially rigid substrate). According to one embodiment, the rolling force is not less than about 2.0 kN, such as not less than about 4.5 kN, or about 10 kN. In various embodiments, the force applied to the major surface of the strip can be not less than about 15 kN and particularly within a range between about 5 kN and about 50 kN.

The shaping process can also be aided by using gripping mechanisms, which manipulate the strip around the mandrel. Such gripping mechanisms can be used in conjunction with the rollers. The process can utilize one or a plurality of gripping mechanisms, such as jaws or pincers, displaced around the mandrel for engaging the strip and maintaining sufficient force to aid the shaping process. In a particular embodiment, the jaws form the strip along the shape of the mandrel while rollers move over the major surface of the strip. After forming half of the shaped piece around the mandrel, another set of jaws can grip the ends of the strip and guide the rigid strip along the remainder of the surface of the mandrel to finish the shaping process. According to another embodiment, rollers can shape the major surface of the strip during the use of the plurality of gripping mechanisms.

FIG. 3 is provided for clarity and illustrates the composite strip 301 after the initial forming process 107 according to one embodiment. According to one embodiment, during the initial shaping of the strip with the mandrel 107 the projections are not manipulated and are shaped around the mandrel. According to a particular embodiment, the partially shaped strip 300 has a substantially cylindrical contour with the projections 303 extending from and end of the cylindrical contour of the shaped strip 300. As illustrated, the cylindrical shape of the strip includes an end that can be substantially flat and another end that can include a jagged contour as a result of the projections 303. FIG. 3 also illustrates a gap 305 in the substantially cylindrical shape. As illustrated, the gap 305 generally extends along a side of the substantially cylindrical shape in the direction of the longitudinal axis.

FIG. 3 further illustrates that in the particular context of forming a substantially cylindrical shape from a rigid strip of composite material, the inner surface 307 of the cylindrical shape can be the polymer layer. Accordingly, the outer surface 309 of the cylindrical shape can be the substantially rigid substrate. Alternatively, the outer surface 309 of the partially shaped strip 300 can be a rigid backing layer overlying the substantially rigid substrate.

In further reference to a particular forming process illustrated in FIG. 1, after the initial shaping of the strip with the mandrel 107, the projections are shaped to form a substantially closed end 109. In such a shaping process, generally the projections are folded inward toward the center point, such that upon completion of folding, the projections are adjacent each other and form a substantially closed end of the shaped piece. According to a particular embodiment, shaping of the projections can include multiple steps. In a first step, a folding force can be applied to the projections to fold the projections inward toward a center point at a first angle. According to one embodiment, the first angle is generally not greater than about 60° relative to the original position of the projections, such as not greater than about 50°, such as about 45°. After applying a first folding force to form the projections to the first angle, a second folding force can be applied to continue folding the projections toward a center point such that projections are substantially perpendicular to the original position and form a substantially closed end of the shaped piece. As such, the projections can be folded to a second angle that can be substantially perpendicular to the original angle, such as about 90°, or not less than about 80°. Generally, the multi-step folding process can include a period between applications of the folding forces, such that a period of between about 0.5 to 2 seconds elapses between removal of one folding force and application of another folding force. The multi-step folding process facilitates equalization and balancing of stresses within the material and can reduce the likelihood of fracture stresses building in the material and can reduce failure of the material during forming.

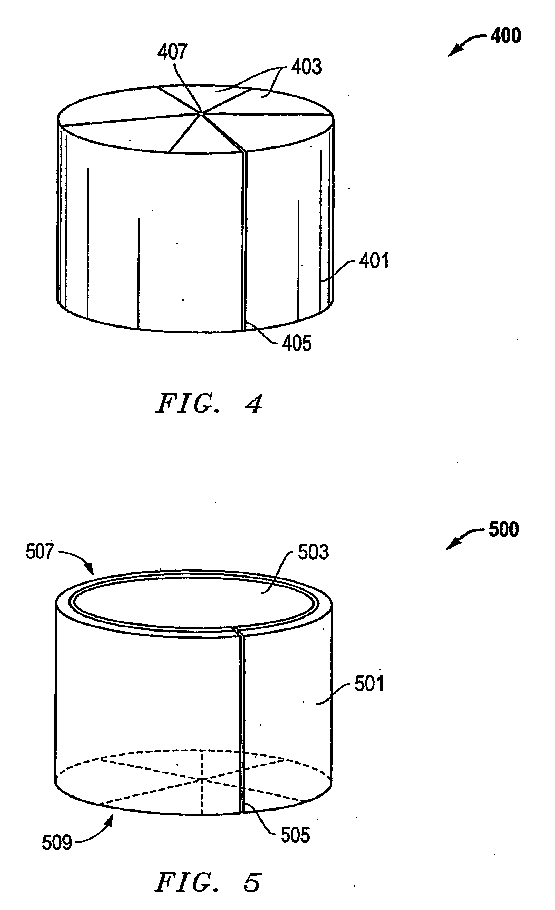

FIG. 4 is provided for clarity and illustrates the strip after the projections are shaped to form a substantially closed end according to one embodiment. In the context of forming a shaped piece having a cylindrical shape, the folded projections 403 can form a substantially closed end to the cylindrically shaped piece, such that the strip forms a cup 400. In addition to the folding steps, according to one embodiment, the folded projections 403 can be stamped or pressed after being folded to a position substantially perpendicular to the original position. A stamping or pressing process assures effective forming of the folded projections 403 and effective forming of the closed end with minimum separations between the folded projections 403.

It will be appreciated that during folding of the projections, the width of the gap 405 can be reduced. Moreover, further processing beyond the folding process, such as a stamping or pressing operation, can further reduce the width of the gap 405. As such, according to one embodiment, the width of the gap 405 of the final shaped piece is not greater than about 0.1 mm, such as not greater than about 0.05 mm, or even not greater than about 0.025 mm.

As further illustrated in FIG. 4, a hole 407 is formed in the closed end as a result of folding the projections 403. In some instances, the hole 407 can be sized to meet the needs of different applications. For example, the hole 407, can function as a receiving port for stabilizing or coupling the shaped composite piece to another article. Additionally, the hole 407 can be further processed to form a particular shape or size for a desired application. The shape of the hole 407 can be dependent in part upon the size of the shaped piece and the shape of the folded projections 403, generally however, the hole 407 can be circular. According to the invention, the diameter of the hole 407 is not greater than 0.1 mm, such as not greater than 0.05 mm. Still, the size of the hole can vary, but is generally within a range of between about mm and 0.1 mm. Alternatively, the size of the hole 407 can be minimized, if it is not desirable for a particular application. The provision of the hole 407 can facilitate reduced stresses on the folded projections 403, providing for shifting of the projections in the presence of excess forces on the shaped composite piece.

In further reference to FIG. 1, after forming the substantially closed end 109 of the shaped piece, the shaped piece can be removed from the mandrel and the channel 111. According to a particular embodiment, the shaped piece can be a bearing cup, for use in a variety of applications.

As such, according to another aspect, a bearing assembly is provided, which includes a composite material comprising a metal substrate having a substantially cylindrical shape and a polymer layer overlying the metal substrate and disposed on an inner surface of the cylindrical shape. The cylindrical shape of the bearing assembly also includes a closed end including a plurality of folded projections.

In further reference to the bearing assembly, FIG. 5 provides a perspective view of a bearing 500 according to a particular embodiment. As illustrated, the bearing 500 has a substantially cylindrical shape, such as a cup shape, having an open end 507 and a closed end 509 (illustrated by dotted lines) made of a plurality of folded projections as discussed in accordance with previous embodiments. The bearing 500 can also include a gap 505 that extends along a side of the substantially cylindrical shape in longitudinal direction. As will be appreciated, the gap 505 can extend through an entire thickness of the cylindrical shape, such that it extends through the material of the bearing 500. In accordance with previously described embodiments, the gap 505 can extend through layers of the composite material including a substantially rigid substrate 501 and a polymer layer 503.

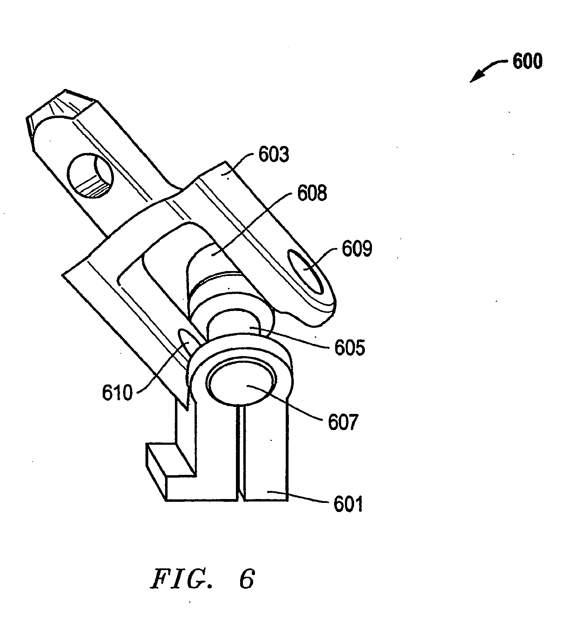

In reference to particular applications of the foregoing bearing assembly, according to one embodiment, bearing 500 can be a bearing cup housed within a universal joint, as illustrated in FIG. 6. FIG. 6 illustrates a universal joint 600 having two U-shaped arm portions 601 and 603, and a t-joint assembly 605 joining the U-shaped arm portions 601 and 603. Each of the arms of the t-joint assembly 605 can be coupled to bearing cups in accordance with previously discussed embodiments. According to one embodiment, each of the bearing cups can be disposed with bearing retainers 607, 608, 609, and 610 (607-610), which are coupled to the U-shaped arm portions 601 and 603. The bearing retainers can generally have a cup-shape with a lip at the open end for retaining the bearing cup within. The bearing cups can generally be disposed within the bearing retainers 607-610 such that they can freely spin within the bearing retainers 607-610. It will be appreciated that the bearing cups facilitate rotational freedom of the t-shaped assembly 605 and transference of rotational forces from one U-shaped arm portion 603 to the other U-shaped arm portion 601 during engagement of the universal joint.

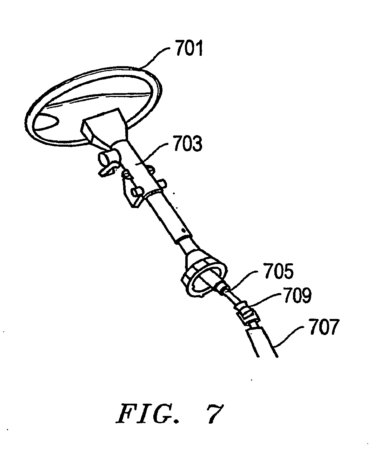

In further reference to particular applications, FIG. 7 provides an illustration of a steering assembly 700 according to one embodiment. According to another aspect, a steering assembly 700 is provided that includes a first shaft 705 having a first end and a second end, such that the first end is coupled to a steering input device 701. As illustrated, the steering assembly 700 also includes a second shaft 707 having a first end and a second end and a coupling 709 fastened to the second end of the first shaft 705 and the first end of the second shaft 707. As described previously, and illustrated in FIG. 6 as well, the coupling can be a universal joint and can include two U-shaped arms coupled to a t-shaped assembly. According to one embodiment, the coupling includes a substantially t-shaped assembly having plurality of arms and a plurality of bearing cups disposed at the ends of each of the arms. The bearing cups can have a substantially cylindrical shape with a closed end made of folded projections. Bearing cups, in accordance with previously described embodiments, can be disposed within bearing retainers coupled to the U-shaped arms.

According to a particular embodiment, the coupling can be a Cardan-style universal joint. In the context of this particular application, according to one embodiment, the coupling can withstand an axial load of greater than about 100N, such as greater than about 150 N, or even 200 N. In further reference to the mechanical properties of the steering assembly, in another embodiment, during operation the coupling has a lash of not greater than about 0°05' under a torque of about 1400N, such as not greater than about 0°03', or even about 0°02' under a torque of about 1400N.

## Claims

1. A process comprising the steps of:
a) providing a rigid strip of material;
b) forming projections (203, 303) along a side of the rigid strip;
c) shaping the rigid strip with a mandrel (107) to form a shaped piece, and
d) shaping the projections (203, 303) to form a substantially closed end (509) of the shaped piece, wherein the substantially closed end (509) includes a hole (407) having a diameter not greater than 0.1 mm.

2. The process of claim 1, wherein the rigid strip is a composite rigid strip (201, 301).

3. The process of claim 2, wherein the composite rigid strip (201, 301) comprises a substantially rigid substrate (501) having a first major surface and a polymer layer (503) overlying the first major surface.

4. The process of claim 3, wherein the polymer layer is a fluoropolymer.

5. The process of any one of claims 1 to 4, wherein step b) comprises cutting a pattern of saw-tooth pattern to form the projections (203, 303).

6. The process of any one of claims 1 to 5, wherein step c) comprises engaging the rigid strip in a channel (105).

7. The process of any one of claims 1 to 5, wherein step c) further comprises shaping the rigid strip around a mandrel (107) to form a rigid strip having a substantially cylindrical contour.

8. The process of any one of claims 1 to 7, wherein step d) comprises folding the projections (203, 303) toward a center point such that each projection (203, 303) is adjacent two other projections (203, 303) and after folding, the projections (403) form the substantially closed end (509) of the shaped piece.

9. The process of claim 8, wherein step d) comprises applying a first folding force to the projections (203, 303) to fold the projections (203, 303) toward the center point and removing the first folding force when the projections (203, 303) reach an angle not greater than about 60° relative to an initial plane and further comprises applying a second folding force to the projections (203, 303) to continue folding the projections (203, 303) toward the center point until the projections (403) form a substantially closed end (509) of the shaped piece.

10. A bearing assembly (500), comprising:
a composite material comprising a metal substrate having a substantially cylindrical shape and a polymer layer (503) overlying the metal substrate and disposed on an inner surface of the cylindrical shape, the cylindrical shape having a closed end (509) comprising a plurality of folded projections, the closed end (509) having a hole (407) substantially centered between the plurality of folded projections (403), the hole (407) having a diameter not greater than 0.1 mm.

11. A steering assembly (700), comprising:
a first shaft (705) having a first end and a second end, wherein the first end is coupled to a steering input device (701);
a second shaft (707) having a first end and a second end; and
a coupling (709) fastened to the second end of the first shaft (705) and the first end of the second shaft (707), the coupling (709) comprising a substantially t-shaped assembly (605) having a plurality of arms and a plurality of bearing cups disposed at an end of each of the arms, each of the bearing cups having a substantially cylindrical shape with a closed end (509) comprising folded projections (403), the closed end (509) including a hole (407) having a diameter not greater than 0.1 mm.

## Patentansprüche

1. Verfahren, das die folgenden Schritte umfasst:
a) Bereitstellen eines starren Materialbands;
b) Bilden von Vorsprüngen (203, 303) entlang einer Seite des starren Bands;
c) Formen des starren Bands mit einem Dorn (107) zur Bildung eines geformten Teils, und
d) Formen der Vorsprünge (203, 303) zur Bildung eines im Wesentlichen geschlossenen Endes (509) aus dem geformten Teil, wobei das im Wesentlichen geschlossene Ende (509) ein Loch (407) mit einem Durchmesser von nicht über 0,1 mm enthält.

2. Verfahren nach Anspruch 1, wobei das starre Band ein starres Verbundband (201, 301) ist.

3. Verfahren nach Anspruch 2, wobei das starre Verbundband (201, 301) ein im Wesentlichen starres Substrat (501) mit einer ersten Hauptfläche und eine auf der ersten Hauptfläche liegende Polymerschicht (503) umfasst.

4. Verfahren nach Anspruch 3, wobei die Polymerschicht ein Fluorpolymer ist.

5. Verfahren nach einem der Ansprüche 1 bis 4, wobei Schritt b) Schneiden eines Musters mit einem Sägezahnmuster zur Bildung der Vorsprünge (203, 303) umfasst.

6. Verfahren nach einem der Ansprüche 1 bis 5, wobei Schritt c) Ineingriffbringen des starren Bands in einen Kanal (105) umfasst.

7. Verfahren nach einem der Ansprüche 1 bis 5, wobei Schritt c) weiterhin Formen des starren Bands um einen Dorn (107) zur Bildung eines starren Bands mit einer im Wesentlichen zylindrischen Kontur umfasst.

8. Verfahren nach einem der Ansprüche 1 bis 7, wobei Schritt d) Falten der Vorsprünge (203, 303) zu einem Mittelpunkt derart, dass jeder Vorsprung (203, 303) neben zwei anderen Vorsprüngen (203, 303) liegt und die Vorsprünge (403) nach dem Falten das im Wesentlichen geschlossene Ende (509) des geformten Teils bilden, umfasst.

9. Verfahren nach Anspruch 8, wobei Schritt d) Anlegen einer ersten Faltkraft an die Vorsprünge (203, 303) zum Falten der Vorsprünge (203, 303) zum Mittelpunkt und Entfernen der ersten Faltkraft, wenn die Vorsprünge (203, 303) einen Winkel bezüglich einer Ausgangsebene erreichen, der nicht größer als ca. 60° ist, und weiterhin Anlegen einer zweiten Faltkraft an die Vorsprünge (203, 303) zum Fortführen des Faltens der Vorsprünge (203, 303) zu dem Mittelpunkt umfasst, bis die Vorsprünge (403) ein im Wesentlichen geschlossenes Ende (509) des geformten Teils bilden.

10. Lageranordnung (500), die Folgendes umfasst:
ein Verbundmaterial mit einem Metallsubstrat, das eine im Wesentlichen zylindrische Form aufweist, und eine Polymerschicht (503), die auf dem Metallsubstrat liegt und an einer Innenfläche der zylindrischen Form angeordnet ist, wobei die zylindrische Form ein geschlossenes Ende (509) aufweist, das mehrere gefaltete Vorsprünge umfasst, wobei das geschlossene Ende (509) ein Loch (407) aufweist, das zwischen den mehreren gefalteten Vorsprüngen (403) im Wesentlichen zentriert ist, wobei das Loch (407) einen Durchmesser aufweist, der nicht größer als 0,1 mm ist.

11. Lenkanordnung (700), die Folgendes umfasst:
eine erste Welle (705) mit einem ersten Ende und einem zweiten Ende, wobei das erste Ende mit einer Lenkeingabevorrichtung (701) gekoppelt ist;
eine zweite Welle (707) mit einem ersten Ende und einem zweiten Ende; und
eine Kupplung (709) die mit dem zweiten Ende der ersten Welle (705) und dem ersten Ende der zweiten Welle (707) verbunden ist, wobei die Kupplung (709) eine im Wesentlichen T-förmige Anordnung (605) mit mehreren Armen und mehreren Lagerschalen aufweist, die an einem Ende jedes der Arme angeordnet sind, wobei jede der Lagerschalen eine im Wesentlichen zylindrische Form mit einem gefaltete Vorsprünge (403) umfassenden geschlossenen Ende (509) aufweist, wobei das geschlossene Ende (509) ein Loch (407) mit einem Durchmesser aufweist, der nicht größer als 0,1 mm ist.

## Revendications

1. Procédé comprenant les étapes consistant à :
a) fournir une bande de matériau rigide ;
b) former des saillies (203, 303) le long d'un côté de la bande rigide ;
c) façonner la bande rigide avec un mandrin (107) pour former une pièce façonnée, et
d) façonner les saillies (203, 303) pour former une extrémité substantiellement fermée (509) de la pièce façonnée, l'extrémité substantiellement fermée (509) comportant un trou (407) ayant un diamètre ne dépassant pas 0,1 mm.

2. Procédé selon la revendication 1, dans lequel la bande rigide est une bande rigide composite (201, 301).

3. Procédé selon la revendication 2, dans lequel la bande rigide composite (201, 301) comprend un substrat substantiellement rigide (501) ayant une première grande surface et une couche polymère (503) recouvrant la première grande surface.

4. Procédé selon la revendication 3, dans lequel la couche polymère est un fluoropolymère.

5. Procédé selon l'une quelconque des revendications 1 à 4, dans lequel l'étape b) comprend le découpage d'un motif en forme de dents de scie pour former les saillies (203, 303).

6. Procédé selon l'une quelconque des revendications 1 à 5, dans lequel l'étape c) comprend l'engagement de la bande rigide dans un canal (105).

7. Procédé selon l'une quelconque des revendications 1 à 5, dans lequel l'étape c) comprend en outre le façonnage de la bande rigide autour d'un mandrin (107) pour former une bande rigide ayant un contour substantiellement cylindrique.

8. Procédé selon l'une quelconque des revendications 1 à 7, dans lequel l'étape d) comprend le pliage des saillies (203, 303) en direction d'un point central de telle sorte que chaque saillie (203, 303) soit adjacente à deux autres saillies (203, 303) et qu'après le pliage, les saillies (403) forment l'extrémité substantiellement fermée (509) de la pièce façonnée.

9. Procédé selon la revendication 8, dans lequel l'étape d) comprend l'application d'une première force de pliage aux saillies (203, 303) pour plier les saillies (203, 303) vers le point central et la suppression de la première force de pliage quand les saillies (203, 303) ont atteint un angle ne dépassant pas environ 60° par rapport à un plan initial, et comprend en outre l'application d'une deuxième force de pliage aux saillies (203, 303) pour continuer le pliage des saillies (203, 303) vers le point central jusqu'à ce que les saillies (403) forment une extrémité substantiellement fermée (509) de la pièce façonnée.

10. Ensemble de paliers (500), comprenant ;
un matériau composite comprenant un substrat métallique ayant une forme substantiellement cylindrique et une couche polymère (503) recouvrant le substrat métallique et disposée sur une surface intérieure de la forme cylindrique, la forme cylindrique ayant une extrémité fermée (509) comprenant une pluralité de saillies pliées, l'extrémité fermée (509) ayant un trou (407) substantiellement centré entre la pluralité de saillies pliées (403), le trou (407) ayant un diamètre ne dépassant pas 0,1 mm.

11. Ensemble de direction (700), comprenant :
un premier arbre (705) ayant une première extrémité et une deuxième extrémité, la première extrémité étant accouplée à un dispositif d'entrée de direction (701) ;
un deuxième arbre (707) ayant une première extrémité et une deuxième extrémité ; et
un accouplement (709) attaché à la deuxième extrémité du premier arbre (705) et à la première extrémité du deuxième arbre (707), l'accouplement (709) comprenant un ensemble substantiellement en forme de t (605) ayant une pluralité de bras et une pluralité de coupelles de palier disposées à une extrémité de chacun des bras, chacune des coupelles de palier ayant une forme substantiellement cylindrique avec une extrémité fermée (509) comprenant des saillies pliées (403), l'extrémité fermée (509) comportant un trou (407) ayant un diamètre ne dépassant pas 0,1 mm.
